# EUROPEAN PATENT SPECIFICATION

(11) **EP 4 342 866 B1**
(45) Date of publication and mention of the grant of the patent: **30.04.2025**
(21) Application number: 22197132.8
(22) Date of filing: 22.09.2022
(51) Int. Cl.: C04B 28/04, C04B 111/28

(54) **FIBER CEMENT PRODUCT AND METHOD OF MANUFACTURING THEREOF**
FASERZEMENTPRODUKT UND VERFAHREN ZUR HERSTELLUNG DAVON
PRODUIT DE FIBROCIMENT ET SON PROCÉDÉ DE FABRICATION

(43) Date of publication of application: 27.03.2024
(73) Proprietor: Etex Services NV, 1880 Kapelle-op-den-Bos (BE)
(72) Inventor: LEEMANS, Raymond, 1860 Meise (BE)
(74) Representative: Etex Services NV - Etex IPSC

(56) References cited:
- WO-A1-2012/084677
- WO-A1-2018/138266
- WO-A1-89/10333
- GB-A- 2 050 460
- JP-A- 2019 104 650
- US-A- 4 543 159
- NEGRO C ET AL: "Effects of flocculants and sizing agents on bending strength of fiber cement composites", CEMENT AND CONCRETE RESEARCH, PERGAMON PRESS, ELMSFORD, NY, US, vol. 35, no. 11, 1 November 2005 (2005-11-01), pages 2104 - 2109, XP027645898, ISSN: 0008-8846, [retrieved on 20051101]
- COUTTS ET AL: "A review of Australian research into natural fibre cement composites", CEMENT AND CONCRETE COMPOSITES, ELSEVIER APPLIED SCIENCE, BARKING, GB, vol. 27, no. 5, 1 May 2005 (2005-05-01), pages 518 - 526, XP027677329, ISSN: 0958-9465, [retrieved on 20050501]
- "ACI Committee 544", vol. 1R-96, 18 November 1996, AMERICAN CONCRETE INSTITUTE, USA, article JAMES I. DANIEL: "State of the Art Report on Fiber Reinforced Concrete", pages: 1 - 23, XP055358715

## Description

### FIELD OF THE INVENTION

The invention relates to a fiber cement product based on a composition comprising fibers, cement and silica that is autoclave-cured.

The invention further relates to a method of manufacturing a fiber cement product, comprising the steps of: (1) providing a slurry of a composition comprising cement, silica and fibers; (2) manufacturing a fiber cement product, such as a sheet, using the said slurry, and (3) curing the fiber cement product by means of autoclave curing.

### BACKGROUND OF THE INVENTION

Such a fiber cement product is well-known. Autoclave-cured fiber cement products have been manufactured for more than a century, after that the Austrian Ludwig Hatschek invented an effective manufacturing method - currently known as the Hatschek process - and licensed this to several companies. The fiber cement products are primarily in the form of sheets, that may be planar, corrugated and of which the dimensions may vary. Their key use is as a building material. Primary applications of autoclave-cured panels are structural flooring (indoor) and façade panels (outdoor). Fiber cement products are furthermore applied as roofing and flooring, floor decking applications, but those applications are primarily served by air-cured fiber cement products.

WO 2012/084677 A1 discloses a composition comprising 26,9 wt% OPC, 53 wt% quartz, 8 wt% cellulose fiber, 10 wt% ground waste from air-cured fiber cement and 4 wt% ATH for Hatschek-manufacturing fibercement products. The density of the obtained autoclaved article is 1,26 kg/dm3. Such autoclaved fibercement products preferably do not contain reinforcing fibers other than cellulose fiber. WO 2012/084677 A1 compares the properties of air-cured and autoclave cured products. Aramid fibers are only listed i.a. in the context of reinforcing fibers applied in air-cured products in addition to cellulose fibers, but not in the context of autoclave-cured products.

Air-cured and autoclave-cured products constitute different technologies. In air-curing, the cement is cured at atmospheric conditions, at room temperature or above, for instance 40-80°C. The overall curing process takes considerable time, for instance 1 to 3 weeks. The cement is the main ingredient of the composition, and typically present in an amount of 60-95 % by weight of the composition. Autoclave-curing is essentially steam curing of the cement at temperatures above 100°C and typically a higher pressure. In order to prevent formation of porous and weak phases (crystalline alpha dicalcium silicate hydrate (a-C2SH) and C3SH1.5) silica (SiO2) is added to the composition. The amount of cement typically is in the range of 25-55 weight% based on dry weight of the composition. The silica content is typically in the range of 20-45 weight% based on dry weight of the composition. This results in formation of more complex calcium silicate hydrates (CSHs) during autoclave-curing, and particularly tobermorite, a calcium silicate hydrate existing with chemical formulas Ca₅Si₆O₁₆(OH)₂·4H₂O and Ca₅Si₆(O,OH)₁₈·5H₂O. The amount of tobermorite and other CSHs formed during the autoclaving is for instance dependent on the initial composition and the autoclave curing conditions.

The curing under autoclave conditions however gives rise to strict limitations in the fibers used in fiber cement. While air-cured fiber cement comprises synthetic fibers such as polyvinyl alcohol, polypropylene, polyacrylonitrile, the fibers of autoclave-cured fiber cement are typically limited to cellulose. Synthetic fibers would not survive the autoclave-curing, or at least would be damaged so that they cannot fulfill their function to provide strength. Autoclave-cured fiber cement products typically include cellulose in an amount of 8-15% by weight relative to the dry weight of the composition. The fiber content of air-cured fiber cement product is somewhat less, typically in the range of 3-10% by weight.

Strength is not merely a nice feature of fiber cement, but a hard requirement. Building materials must be reliable and be able to withstand the impact of weather conditions when used outdoor. Water absorption is a key parameter that defines the impact of humidity on the fiber cement product. Tensile strength, typically measured as the modulus of rupture (SMOR) is the maximum stress under bending conditions. This parameter is relevant in view of effect of wind, snow, deformation due to (differential) contraction and/or expansion. Additional parameters are the iMOR (J/m²) also known as the fracture energy and the dMOR (mm) as the maximum deformation in a bending test. In order to meet such tests for outdoor use, fiber cement sheets are typically produced in medium- or high-density, in other words with a density of at least 1.2 kg/dm³ for medium density and at least 1.5 kg/dm³ for high density products. Low density products are merely feasible for indoor applications such as ceilings, where mechanical strength is less of an issue.

Beyond strength, building materials such as fiber cement panels further must be sufficiently fire resistant. Recent fires in high towers with disastrous consequences have emphasized the importance of fire resistance, both for the individual materials as for the manner of assembly. The critical ingredient in fiber cement is clearly its fibers, as the cement is inorganic material and hence not combustible. However, a reduction in fiber content also leads to an unexpectable reduction in flexural strength and other mechanical properties.

### SUMMARY OF THE INVENTION

It is therefore a first object of the present invention to provide an autoclave-cured fiber cement product with improved fire resistance, which does not lead to a significant performance loss, particularly with respect to the necessary mechanical properties
It is a second object of the present invention to provide a method of manufacturing such a fiber cement product.

The first object is achieved in a fiber cement product based on a composition comprising fibers, cement and silica that is autoclave-cured, wherein said fibers comprise cellulose fibers and aramid fibers. It has been surprisingly found that a fiber mixture of cellulose fibers and aramid fibers survives the autoclave curing and leads to excellent mechanical properties. At the same time, the amount of fibers can be reduced significantly.

The second object is achieved in a method of manufacturing a fiber cement product, comprising the steps of: (1) providing a slurry of a composition comprising cement, silica, cellulose fibers and aramid fibers; (2) manufacturing a fiber cement product, such as a sheet, using the said slurry, and (3) curing the fiber cement product by means of autoclave curing.

It has been unexpectedly found that the use of aramid fibers in an autoclave-cured fiber cement product turns out to give beneficial results. This type of synthetic fibers may be used in autoclave-cured compositions, rather than only in air-cured compositions. Moreover, both the mechanical and the fire resistance properties meet required standards. The aramid fibers herein are understood to act as technical fibers that are able to reinforce the cement matrix in the fiber cement product. That these fibers survive autoclave-curing is a surprise, given that base hydrolysis of amide bonds is theoretically feasible under conditions of strong base, heat and presence of water, which are the ingredients of autoclave-curing of alkaline fiber cement. Apparently, the aramid structure herein stabilizes the fiber. Moreover, it is not excluded that the polar amide may interact with the cement and silica matrix, for instance by hydrogen bridges, therewith stabilizing the fiber and also strengthening the fiber cement product.

In a particular embodiment, the amount of aramid fibers is less than 1 weight% based on the dry weight of the composition. An amount of at most 0.8 weight% has turned out sufficient. Very good results were moreover obtained with concentrations of at most 0.5 weight%, and even 0.25 weight%. Such an amount of aramid fiber is preferably combined with a cellulose fiber content of at most 7 weight%, based on dry weight of the composition, for instance at most 6 weight% or even 2-5 weight%. Preliminary test results have shown that the mechanical properties of a fiber mixture of 5weight% cellulose fibers and 0.25-0.5 weight% aramid fibers were better than those of a reference including 8 weight% cellulose fibers. As a consequence, the content of cellulose fibers may be further reduced, down to 2 weight% based on dry weight.

Preferably, the aramid fibers have a fiber diameter of less than 25 µm, more preferably in the range of 5-15 µm, more preferably 6-12 µm or even 7-11 µm, such as 8 µm. Use of aramid fibers with a comparatively small diameter is advantageous, so as to include a sufficient number of aramid fibers while keeping the overall content of aramid fibers limited to a commercially acceptable degree. This result is highly surprising in the light of reported trials with aramid fibers, as published in Uchida et al, 'Ultra high strength fiber reinforced concrete using aramid fiber', in B.H. Oh et al (eds.), Proceedings of Fracture Mechanics of Concrete and Concrete Structures (Conference), May 23-28 2010, (2010), 1492-1497. Uchida et al. report that 1% aramid fibers with a fiber diameter of 12 µm could not dispersed sufficiently, leading to a too small flow in a flow test. The authors decided based thereon to cancel subsequent tests with aramid fibers of such diameter. According to them, such a limitation in the fiber content would imply no improvement in the flexural and tensile properties of hardened concrete.

The length of the fibers may be chosen rather widely. In preliminary experiments, good results were obtained with fiber length of 8 and 12 mm. Preferably, the length is in the range of 4 to 20 mm. It is believed that longer fibers, such as those with a diameter of more than 6 mm, are more effective in providing strength to autoclave-cured fiber cement products.

The aramid fibers are preferably para-aramid fibers. Aramid fibers and para-aramid fibers, as well as their chemical structure and feasible variations are known per se in the art. They are aromatic amide polymers. Para-aramids are chemically p-phenylene terephthalamides (PPTAs). Para-aramid fibers are for instance commercialized under the trade names Technora^{™}, Kevlar^{™}, Nomex^{™} and Twaron^{™}. More preferably, the used para-aramid fibers are of the copolyamide type. A preferred aramid fiber of the copolyamide type is a reaction product of p-phenylene diamine (PPD) and 3,4'-diaminodiphenylether (3,4'-ODA) with terephthaloyl chloride (TCI). This type is commercialized under the trade name Technora^{™} by Teijin Aramid.

In one further embodiment, a mixture of aramid fibers, such as para-aramid fibers is used. For instance, a mixture of different types of aramid fibers may be applied. Alternatively or additionally, a mixture of one type of aramid fibers, such as para-aramid fibers of the copolyamide type of different fiber diameter may be applied. Any combination of fiber diameters in the range of 5-15 µm seems feasible. An advantageous option appears a mixture of fibers of two or three fiber diameters, such as 8, 10 and 12 µm. It will be understood that the fiber diameter is specified by the supplier, and that the actual fiber diameter will range around such specified fiber diameter. Hence, a mixture of fibers of two or three fiber diameter which are not too far apart, may in practice constitute a fiber mixture wherein the fiber diameter is within a broad range. A fiber mixture with fibers of different diameters is deemed to generate a higher structural integrity, or on microstructural level, higher cohesion and to provide fiber pull out. Furthermore, a mixture of fibers of different fiber length may be applied, for instance between 2 and 20 mm, such as between 5 and 15 mm. Such a mixture of different fiber lengths is deemed to provide an optimum between strength and specific surface area.)

The cellulose fibers as used in the invention are preferably a mixture of chemical wood pulp, more particularly Kraft pulp. The wood pulp may comprise both softwood and hardwood. The average fiber length is suitably at least 1.5 mm, preferably at least 2.0 mm, when measured using Valmet FS5 fiber analysis apparatus. The cellulose fiber is preferably refined, for instance to a SR fineness of about 10 to 40, preferably 15 to 30. The SR fineness is the Schopper-Riegler fineness as mea.sured in accordance with ISO5267-1: 1999
While the beneficial addition of a combination of aramid fibers and cellulose fibers may be useful for any type of autoclave-cured fiber cement and any type of manufacturing thereof, it is deemed particularly useful for products wherein mechanical performance is a key requirement. This applies to high-density products, having a density of at least 1.5 kg/dm³. Fiber cement sheets that are designed and commercialized for use in facades, are examples of such high-density products. These products typically have a thickness of 6-12 mm, for instance 8 mm, and are for instance sold in sizes of 1 to 2 meters, for instance under the tradename Equitone^{™} by Eternit NV. However, this does not exclude the use in other high- or medium density products.

In at least some embodiments of the invention, it was found that the density of the product increases relative to a product with merely cellulose fibers and without aramid fibers. It is believed that is an indication of a rather uniform distribution of the fibers throughout the fiber cement product. Moreover, experimental results indicate that the aramid fibers lead to a reduced porosity. Such reduced porosity may be beneficial for limiting the impact of water absorption, such as reduced curling and bowing of panels.

The fiber cement composition for use in the present invention is intended for autoclave-curing. As such it comprises both cement and silica in a predefined molar ratio. This ratio is known in the art as the ratio between total reactive CaO and total reactive SiO2. In one embodiment, it is in the range of 0.4 to 0.9. Typically, the weight ratio between cement, such as Portland cement, and silica, such as quartz, is in the range of 0.8-1.2, with for instance 25-50% cement and 30-55% silica. Additional ingredients deemed important for an autoclave-curable composition is at least one additional source of aluminium, such as aluminium hydroxide, kaolin, metakaolin and the like. The cement is preferably Portland cement, such as Portland Cement type I or type II, but the use of another cement type, such as high alumina cement (also known as calcium aluminate cement), Portland cement of iron, trass-cement, slag cement, is not excluded.

The composition may include further ingredients and common additives. Dependent to some extent on the curing process used, the fiber cement slurry typically comprises water, fibers, cement (e.g. Portland cement) and silica (for instance as ground sand, silica sand flour, quartz flour) and optionally one or more hydrophobizing agents, limestone, chalk, quick lime, slaked or hydrated lime, condensed silica fume, microsilica, kaolin, metakaolin, wollastonite, mica, perlite, vermiculite, aluminum hydroxide (ATH), pigments, anti-foaming agents, flocculants, and/or other additives as known to the skilled person in the art. Optionally color additives (e.g. pigments) are added, to obtain a fiber cement product which is so-called colored in the mass.

In order to meet product requirements, such as for façade applications, it is deemed beneficial to apply a hydrophobation agent. As in known in the art, such hydrophobation agent may be applied on the surface of the fiber cement product or be added into the composition with which the fiber cement product will be manufactured.

Furthermore, the fiber cement sheet may include one or more pigments and/or be subject to any surface treatment, so as to obtain a product that is visually very attractive. Different approaches are known in the art. In one implementation, pigment is included into the composition with which the fiber cement will be manufactured. This is known as mass-coloring. The pigment may herein be added either in one or more sublayers of the fiber cement sheet or in the entire fiber cement sheet. In a further implementation, the surface structure may be modified mechanically, for instance by polishing (sanding), abrasive blasting and/or the use of tools providing protrusions and/or recesses according to any desired pattern. In again another application, a surface coating is applied on top of the fiber cement sheet. This surface coating may be or include an opaque coating, a translucent coating, a transparent coating, an inkjet print and also a transparent colored coating including transparent pigment such as transparent iron oxide. It will be understood that these different implementations may be combined to achieve a beneficial result. Further information on these treatments can be found in following patents and patent applications filed by Applicant and/or Eternit NV: EP1914215B1, EP2036871B1, WO2016/146423A1, WO2017/001236A1, EP3152020B1, WO2018/178079A1, WO2019/115615A1. Further surface treatments may include mechanical treatments, such as polishing, roughening, abrasive blasting, embossing, creating a profile and the like, as known to the skilled person. The fiber cement product may be furthermore treated - among other treatments - to remove edges, to create holes and/or cavities for arrangement of fasteners, and/or to create edge patterns such as a tongue and groove with which sheets may be coupled to each other.

The fiber cement product may be manufactured by means of a variety of manufacturing processes known in the art. This includes casting, flow-on process, Magnani process, extrusion process, Hatschek process. A preferred manufacturing process for high-density fiber cement products is the Hatschek process. Such a process essentially comprises the steps of (i) forming at least one fiber cement film on a rotating sieve in contact with a fiber cement slurry in a vat; (ii) transferring said at least one fiber cement film from said sieve to a felt transport belt, (iii) accumulating the fiber cement film on an accumulator roll via the felt transport belt, and (iv) curing the fiber cement product comprising a plurality of accumulated fiber cement films, so as to form a fiber cement product.

The autoclave curing process is preferably performed at a temperature in the range of 150-200°C, for instance 170-180°C, and under increased pressure, for instance 5-10 bar. The autoclave curing process may be preceded by a pre-curing, typically up to 48 hours, and for instance 10-20 hours at room temperature and atmospheric conditions. In some advantageous embodiments, the green sheet is compressed prior to the autoclave-curing, for instance at pressure of 20-30 MPa, so as to achieve a higher density and higher strength.

The resulting fiber cement product is typically in the form of a panel, plate or sheet, typically being rectangular and made out of fiber cement material. In a preferred embodiment of manufacturing by means of the Hatschek process, the fiber cement product is created as a series of monolayers of for instance up to 0.5 mm, which are cured in its entirety. While a rectangular sheet is deemed preferred, the fiber cement sheet may be brought into a desired shape prior to curing, such as a corrugated sheet and/or a sheet with one or more tongues on a side face so as to enable interlocking of panels. Furthermore, after curing, it may be mechanically treated in known manner. The fiber cement product may be coated and/or decorated in a manner known in the art, so as to provide an outer surface with any desired color and or design.

The above and other characteristics, features and advantages of the present invention will become apparent from the following detailed description, which illustrate, by way of examples, the principles of the invention. The description is given for the sake of example only, with the scope of the invention being limited by the claims.

### EXAMPLES

### Example 1

Tests were performed based on compositions shown in Table 1.

**Table 1 - compositions tested**

| | Reference | I1 | I2 | I3 | I4 | I5 |
|---|---|---|---|---|---|---|
| Portland Cement type I | 34 | 35 | 35 | 35 | 35 | 35 |
| Quartz | 35 | 37 | 37 | 37 | 37 | 37 |
| Cellulose fibers | 8 | 5 | 5 | 5 | 5 | 5 |
| Aramid fibers | 0 | 0.25 | 0.25 | 0.50 | 0.50 | 0.50 |
| Length | - | 8mm | 12 mm | 8 mm | 12 mm | 6mm |
| Fiber diameter | | 8µm | 8µm | 8µm | 8µm | 12 µm |
| Calcium silicate | 7 | 7 | 7 | 7 | 7 | 7 |
| Aluminiumtrihydroxide (ATH) | 4 | 4 | 4 | 4 | 4 | 4 |
| Pigment | 4 | 4 | 4 | 4 | 4 | 4 |
| Kaolin | 4 | 4 | 4 | 4 | 4 | 4 |
| Calcium hydroxide | 4 | 4 | 4 | 4 | 4 | 4 |

The compositions shown in Table 1 used para-aramid fibers traded as Technora^{™} and supplied by Teijin Aramid BV and had a density of 1390 kg/m³. The cellulose was a mixture of chemical wood pulp, more particularly Kraft pulp with a length of at least 1.5 mm, when measured using Valmet FS5 fiber analysis apparatus. The cellulose fiber was refined to a SR fineness of about 10 to 40, preferably 15 to 30 (SR).

The ingredients of the slurry were mixed and applied to a casting tool for laboratory experiments. The resulting samples were dried and pre-cured at atmospheric conditions, followed by autoclave curing at 7 bar for 12 hours.

### Example 2

Mechanical tests were performed on the fiber cement products made. The modulus of rupture (MOR, typically expressed in Pa = kg/m2.s) of each of the samples was measured by making use of a UTS/INSTRON apparatus (type 3345, cel = 5000N). The limit of elastic deformation and the stress at the limit of elastic deformation were measured by making use of a UTS/INSTRON apparatus (type 3345, cel = 5000N) with software Bluehill by Instron (Norm EN12467 and related norms). Table 2 specifies test results

**Table 2 - initial test results of mechanical properties**

| | Ref | I1 | I2 | I3 | I4 | I5 |
|---|---|---|---|---|---|---|
| Density | 100% | 109% | 110% | 108% | 109% | 101% |
| E-modulus | 100% | 139% | 146% | 127% | 139% | 125% |
| SMOR | 100% | 122% | 122% | 132% | 142% | 108% |

### Example 3

A fire test was performed on selected samples. Fire testing occurred in accordance with EN13501-1 norm (Fire classification of construction products and building elements). This norm specifies that a building element is provided with a classification A1 or A2 or worse, dependent on the results in EN ISO 1182 and furthermore EN ISO 1716. For A1 the criteria of both norms should be met, for A2 the criteria of one of the norms should be met, plus additionally criteria of EN13823

**Table 3 - criteria of EN ISO norm 1182**

| Parameter | ISO norm | A1 | A2 |
|---|---|---|---|
| Maximum oven temperature rise (ΔT) | 1182 | ΔT ≤ 30 °C | ΔT ≤ 50 °C |
| Mass loss (Δm) | 1182 | Δm ≤ 50% | Δm ≤ 50% |
| Sustained flaming (t_{f}) | 1182 | *t_{f} =* 0 s (no sustained flaming) | *t_{f} ≤* 20 s |

**Table 4 - results in fire test according to ISO 1182**

| Parameter | Reference | I5 |
|---|---|---|
| Maximum oven temperature rise (ΔT) | 50°C | 13 °C |
| Mass loss (Δm) | 16.1% | 12.8% |
| Sustained flaming (t_{f}) | 70 (s) | 0 (s) |

### Example 4

Selected formulations of example 1 were used to prepare samples by means of a Hatschek process. Use was made of a pilot line. A sheet was made including 22 monolayers. The sheet was compressed at a pressure of 230 kg/m² during 10 minutes and was subsequently precured overnight following by curing in an autoclave at 7 bar during 12 hours. Mechanical tests were performed, both under air-dry and saturated conditions, by making use of a UTS/INSTRON apparatus (type 3345, cel = 5000N).

**Table 5 - mechanical test results for fiber cement sheets made with Hatschek process. All values in % relative to the reference.**

| | Conditions | Ref | I3 | I4 |
|---|---|---|---|---|
| Density | | 100 | 105 | 105 |
| Porosity | | 100 | 92 | 91 |
| E-modulus | Air-dry | 100 | 103 | 116 |
| SMOR | Air-dry | 100 | 98 | 94 |
| dMOR | Air-dry | 100 | 99 | 80 |
| iMOR | Air-dry | 100 | 95 | 72 |
| E-modulus | Water saturated | 100 | 141 | 123 |
| SMOR | Water saturated | 100 | 118 | 112 |
| dMOR | Water saturated | 100 | 108 | 103 |
| iMOR | Water saturated | 100 | 135 | 115 |

The examples indicate that a fiber cement product can be formed on the basis of a combination of aramid fibers and cellulose fibers as process fibers and by using autoclave curing. This is in itself a surprising result, as the inclusion of synthetic fibers into fiber cement conventionally prohibits autoclave-curing and demands air-curing. Furthermore, it was found that a fiber cement product including such a fiber mixture has mechanically good properties and meets the criteria of fire resistance class A1. Particularly preferred is the use of aramid fibers with a fiber diameter in the range of 6-14 µm, such as 8 µm- 12 µm. As shown in Example 5, autoclave cured fiber cement products with mechanical properties (SMOR, dMOR and IMOR, under air dry and water saturated conditions) that correspond to those of the reference were obtained, notwithstanding the reduction of cellulose content with 30%. The inventor believes that a minimum fiber density may be relevant for optimizing the result, so that the use of fibers with a comparatively small fiber diameter is deemed preferable. Evidently, variations hereon are feasible, and combinations with other fibers are not excluded. Such other fibers could be other types of aramid fibers, aramid fibers (of the same or a different type) having larger fiber diameter, other types of fibers such as alkaline-resistant glass fibers and/or basalt fibers.

## Claims

1. Autoclave-cured fiber cement product based on a composition comprising fibers, cement and silica, wherein said fibers comprise cellulose fibers and aramid fibers.

2. Fiber cement product as claimed in claim 1, wherein the aramid fibers are present in an amount of less than 1 weight% based on dry weight of said composition and preferably at most 0.8 weight% based on dry weight of said composition.

3. Fiber cement product as claimed in claim 2, wherein the aramid fibers are present in an amount of at most 0.5 weight%, preferably at most 0.30 weight%, more preferably in the range of 0.05-0.20 weight% based on dry weight of said composition.

4. Fiber cement product as claimed in any of the claims 1-3, wherein the cellulose fibers are present in an amount of at most 7 weight% based on dry weight of said composition, preferably in the range of 2-5 weight%.

5. Fiber cement product as claimed in any of the claims 1-4, wherein the aramid fibers have a diameter of less than 15µm, preferably 5-15µm, more preferably in the range of 8-12µm.

6. Fiber cement product as claimed in any of the claims 1-5, wherein the aramid fibers have a length in the range of less than 20 mm, preferably in the range of 6-18 mm, more preferably in the range 7-15 mm, for instance 8-12mm.

7. Fiber cement product as claimed in any of the claims 1-6, wherein the product has a high density of at least 1.5 kg/dm³.

8. Fiber cement product as claimed in any of the claims 1-7, wherein the composition further comprises recycled fiber cement material.

9. Fiber cement product as claimed in claim 8, wherein the recycled fiber cement material has a fiber cement of at most 2 % by weight of organic carbon content.

10. Fiber cement product as claimed in any of the preceding claims, wherein the aramid fiber is a para-aramid fiber.

11. Method of manufacturing a fiber cement product, comprising the steps of:
- providing a slurry of a composition comprising cement, silica, cellulose fibers and aramid fibers;
- manufacturing a fiber cement product, such as a sheet, using the said slurry, and
- curing the fiber cement product by means of autoclave curing.

12. Method as claimed in claim 11, wherein the fiber cement product is manufactured by means of a Hatschek process.

13. Method as claimed in claim 11 or 12, wherein the composition comprises less than 1% by weight of aramid fibers and at most 6% of cellulose fibers based on the dry weight of the composition.

14. Method as claimed in any of the preceding claims 11-13, wherein the autoclave curing is performed at a temperature of 160-200°C.

15. Method as claimed in any of the preceding claims 11-14, wherein the autoclave curing is preceded by a precuring step under atmospheric conditions.

## Patentansprüche

1. Autoklavengehärtetes Faserzementprodukt auf Basis einer Zusammensetzung die Fasern, Zement und Siliziumdioxid umfasst, wobei die Fasern Zellulosefasern und Aramidfasern umfassen.

2. Faserzementprodukt nach Anspruch 1, wobei die Aramidfasern in einer Menge von weniger als 1 Gew.-%, bezogen auf das Trockengewicht der Zusammensetzung, und vorzugsweise höchstens 0,8 Gew.-%, bezogen auf das Trockengewicht der Zusammensetzung, vorhanden sind.

3. Faserzementprodukt nach Anspruch 2, wobei die Aramidfasern in einer Menge von höchstens 0,5 Gew.-%, vorzugsweise höchstens 0,30 Gew.-%, besonders bevorzugt im Bereich von 0,05-0,20 Gew.-%, bezogen auf das Trockengewicht der Zusammensetzung, vorhanden sind.

4. Faserzementprodukt nach einem der Ansprüche 1 bis 3, wobei die Zellulosefasern in einer Menge von höchstens 7 Gew.-%, bezogen auf das Trockengewicht der Zusammensetzung, vorzugsweise im Bereich von 2 bis 5 Gew.-%, vorhanden sind.

5. Faserzementprodukt nach einem der Ansprüche 1 bis 4, wobei die Aramidfasern einen Durchmesser von weniger als 15 µm, vorzugsweise 5 bis 15 µm, besonders bevorzugt im Bereich von 8 bis 12 µm haben.

6. Faserzementprodukt nach einem der Ansprüche 1-5, wobei die Aramidfasern eine Länge im Bereich von weniger als 20 mm, vorzugsweise im Bereich von 6-18 mm, besonders bevorzugt im Bereich von 7-15 mm, beispielsweise 8-12 mm, aufweisen.

7. Faserzementprodukt nach einem der Ansprüche 1-6, wobei das Produkt eine hohe Dichte von mindestens 1,5 kg/dm3 aufweist.

8. Faserzementprodukt nach einem der Ansprüche 1-7, wobei die Zusammensetzung außerdem recyceltes Faserzementmaterial umfasst.

9. Faserzementprodukt nach Anspruch 8, wobei das recycelte Faserzementmaterial einen Faserzement mit einem Gehalt an organischem Kohlenstoff von höchstens 2 Gew.-% aufweist.

10. Faserzementprodukt nach einem der vorhergehenden Ansprüche, wobei die Aramidfaser eine Para-Aramidfaser ist.

11. Verfahren zur Herstellung eines Faserzementprodukts, umfassend die Schritte::
- Bereitstellen einer Aufschlämmung einer Zusammensetzung, die Zement, Siliziumdioxid, Zellulosefasern und Aramidfasern umfasst;
- Herstellen eines Faserzementprodukts, wie z.B. einer Platte, unter Verwendung der Aufschlämmung, und
- Aushärten des Faserzementprodukts durch Aushärten im Autoklaven.

12. Verfahren nach Anspruch 11, wobei das Faserzementprodukt mittels eines Hatschek-Verfahrens hergestellt wird.

13. Verfahren nach Anspruch 11 oder 12, wobei die Zusammensetzung weniger als 1 Gew.-% Aramidfasern und höchstens 6 % Zellulosefasern, bezogen auf das Trockengewicht der Zusammensetzung, enthält.

14. Verfahren nach einem der vorhergehenden Ansprüche 11 bis 13,wobei die Aushärtung im Autoklaven bei einer Temperatur von 160 bis 200°C erfolgt.

15. Verfahren nach einem der vorhergehenden Ansprüche 11-14, wobei der Autoklavenhärtung ein Vorhärtungsschritt unter atmosphärischen Bedingungen vorausgeht.

## Revendications

1. Produit de fibrociment durci en autoclave à base d'une composition comprenant des fibres, du ciment et de la silice, lesdites fibres comprenant des fibres de cellulose et des fibres d'aramide.

2. Produit en fibrociment selon la revendication 1, dans lequel les fibres d'aramide sont présentes dans une quantité inférieure à 1 % en poids par rapport au poids sec de ladite composition et, de préférence, dans une proportion maximale de 0,8 % en poids par rapport au poids sec de ladite composition.

3. Produit en fibrociment selon la revendication 2, dans lequel les fibres d'aramide sont présentes dans une quantité d'au plus 0,5 % en poids, de préférence d'au plus 0,30 % en poids, plus préférablement dans la gamme de 0,05 à 0,20 % en poids par rapport au poids sec de ladite composition.

4. Produit en fibrociment selon l'une quelconque des revendications 1 à 3, dans lequel les fibres de cellulose sont présentes dans une quantité d'au plus 7 % en poids par rapport au poids sec de ladite composition, de préférence dans la gamme de 2 à 5 % en poids.

5. Produit en fibrociment selon l'une quelconque des revendications 1 à 4, dans lequel les fibres d'aramide ont un diamètre inférieur à 15 µm, de préférence de 5 à 15 µm, plus préférablement dans la gamme de 8 à 12 µm.

6. Produit en fibrociment selon l'une quelconque des revendications 1 à 5, dans lequel les fibres d'aramide ont une longueur dans la gamme inférieure à 20 mm, de préférence dans la gamme de 6 à 18 mm, plus préférablement dans la gamme de 7 à 15 mm, par exemple de 8 à 12 mm.

7. Produit en fibrociment selon l'une quelconque des revendications 1 à 6, dans lequel le produit a une densité élevée d'au moins 1,5 kg/dm3.

8. Produit en fibrociment selon l'une quelconque des revendications 1 à 7, dans lequel la composition comprend en outre un matériau en fibrociment recyclé.

9. Produit en fibrociment selon la revendication 8, dans lequel le matériau en fibrociment recyclé présente une teneur en fibrociment d'au plus 2 % en poids de carbone organique.

10. Produit en fibrociment selon l'une quelconque des revendications précédentes, dans lequel la fibre aramide est une fibre para-aramide.

11. Procédé de fabrication d'un produit en fibrociment, comprenant les étapes suivantes:
- fournir une suspension d'une composition comprenant du ciment, de la silice, des fibres de cellulose et des fibres d'aramide ;
- fabriquer un produit en fibrociment, tel qu'une feuille, en utilisant ladite suspension, et
- durcir le produit en fibrociment au moyen d'un durcissement en autoclave.

12. Procédé selon la revendication 11, dans lequel le produit en fibrociment est fabriqué au moyen d'un procédé Hatschek.

13. Procédé selon la revendication 11 ou 12, dans lequel la composition comprend moins de 1 % en poids de fibres d'aramide et au plus 6 % de fibres de cellulose par rapport au poids sec de la composition.

14. Procédé selon l'une quelconque des revendications 11 à 13 précédentes, dans lequel le durcissement en autoclave est effectué à une température de 160 à 200 °C.

15. Procédé selon l'une quelconque des revendications 11 à 14 précédentes, dans lequel le durcissement en autoclave est précédé d'une étape de prédurcissement dans des conditions atmosphériques.
